# FASCICULE DE BREVET EUROPEEN

(11) **EP 2 309 611 B1**
(45) Date de publication et mention de la délivrance du brevet: **01.05.2019**
(21) Numéro de dépôt: 10354049.8
(22) Date de dépôt: 16.09.2010
(51) Int. Cl.: H02B 1/21, H02B 1/36

(54) **Unité fonctionnelle pour tableau basse tension avec position test**
FUNKTIONSEINHEIT FÜR NIEDERSPANNUNGSVERTEILERFELD MIT TESTPOSITION
Functional unit for low voltage distribution panel with test position

(30) Priorité: 06.10.2009 FR 0904763
(43) Date de publication de la demande: 13.04.2011
(73) Titulaire: Schneider Electric Industries SAS, 92500 Rueil-Malmaison (FR)
(72) Inventeur: Gallego, Marc-Alexandre, 38050 Grenoble Cedex 09 (FR); Pellicano, Joseph, 38050 Grenoble Cedex 09 (FR); Carle, Pierre, 38050 Grenoble Cedex 09 (FR); Gasparetti, Bruno, 38050 Grenoble Cedex 09 (FR)
(74) Mandataire: Colette, Marie-Françoise

(56) Documents cités:
- EP-A2- 1 521 511
- WO-A1-02/087037
- US-A- 4 831 489
- US-A1- 2007 111 575

## Description

### DOMAINE TECHNIQUE

L'invention concerne le domaine des installations électriques de distribution et commande, notamment basse tension pour utilisation industrielle, commerciale,... Plus particulièrement, l'invention se rapporte aux unités fonctionnelles, classiquement des tiroirs, présentes dans les tableaux, armoires ou autres cellules de distribution, et à leur conception de façon à diminuer l'encombrement des connexions et à simplifier la réalisation de tests des appareillages présents dans les unités fonctionnelles. L'invention concerne également une cellule de distribution offrant une large modularité.

### ETAT DE LA TECHNIQUE

Une installation de distribution basse tension, par exemple sur un site industriel, comprend une ligne principale d'alimentation, souvent parallèle au plafond du site, et un circuit de distribution aval alimentant les différentes charges utiles ; le circuit de distribution est relié à la ligne principale au niveau de cellules, tableaux ou armoires de distribution, qui logent les appareillages de protection et commande.

Dans une conception classique décrite par exemple dans EP 0 944 145, une cellule de distribution électrique comprend, au fond, un jeu de barres vertical qui se connecte sur la ligne principale multipolaire, un circuit de distribution qui peut comprendre également un jeu de barres, localisé sur le côté ou le fond de la cellule, et sur lequel sont reliés les câbles du circuit de distribution, et une pluralité d'unités fonctionnelles qui se branchent sur les jeux de barres de la cellule. Les unités fonctionnelles sont usuellement sous forme de tiroirs pouvant coulisser horizontalement entre une position connectée et une position déconnectée ; chaque tiroir comprend une platine de support et de branchement sur laquelle peuvent être mis en place différents appareillages de protection et commande, et un système de connexion permettant un raccordement simplifié entre les appareillages montés et les jeux de barres.

Ce type de configuration offre pour avantage notable une simplicité de connexion une fois les unités fonctionnelles réalisées, et donc une possibilité de retirer aisément un des tiroirs de l'armoire, par exemple pour maintenance ou modification de la protection/commande de l'une des charges distribuées. Pour vérifier les fonctionnalités d'un tiroir, il apparaît cependant souhaitable d'ajouter une possibilité de test, correspondant à une alimentation des appareillages du tiroir mais une absence de distribution : la partie puissance reste déconnectée alors que la partie « auxiliaires » est alimentée.

La place disponible dans un tiroir fonctionnel reste un critère majeur, et il importe de minimiser l'encombrement de la platine par le système de connexion de puissance, les contacts auxiliaires et autres éléments nécessaires à leur fonctionnement. Ainsi, bien que présentée dans le document US 4 020 301, la réalité d'une fonction test est peu pratiquée, en raison des difficultés de réalisation et d'encombrement ; classiquement, un appareil de coupure est intercalé pour réaliser les tests, ce qui cependant laisse les connecteurs de puissance sous tension, sans réelle sécurité. Pour augmenter la sécurité par une mise hors tension réelle, le document WO 03/065529 décrit un tiroir permettant par un outil de manoeuvre de se placer dans une telle position intermédiaire, ce qui reste coûteux et complexe. Une autre option présentée dans DE 37 05 728, EP 1 521 511 ou US 2007/111575 consiste à utiliser des contacts auxiliaires glissants qui cependant sont onéreux et volumineux, ce qui limite en outre le nombre de tests possibles.

### EXPOSE DE L'INVENTION

Parmi autres avantages, l'invention vise à pallier des inconvénients des platines de support et branchement des unités fonctionnelles existantes, et en particulier à mettre en place une plateforme compacte reprenant les moyens de connexion et permettant la réalisation d'une fonction test de façon naturelle. L'invention vise également à optimiser l'agencement interne de la plateforme en intégrant le système de connexion pour laisser le maximum de place résiduelle dans une unité de taille standard pour les appareillages électriques. L'invention propose aussi une modularité de mise en place des platines de support et branchement, en particulier par des armoires pouvant accepter deux largeurs différentes d'unités fonctionnelles.

Sous un de ses aspects, l'invention est ainsi relative à une unité fonctionnelle, notamment de type tiroir, adaptée pour une cellule de distribution et commande électrique, en particulier basse tension. L'unité fonctionnelle comprend une platine destinée à supporter les appareillages électriques, une devanture avec une poignée de mobilisation de la platine, et des parois latérales pouvant être guidées dans la cellule. Sur son côté opposé et pour partie au moins parallèle à la devanture, ledit côté étant de préférence non rectiligne, par exemple en L, l'unité fonctionnelle selon l'invention comprend un système de connexion de puissance aux barres de la cellule par un mouvement de translation de la platine ; la platine supporte en outre un système de connexion auxiliaire activé par le même mouvement de translation. Selon l'invention, les systèmes de connexion, principal et auxiliaires, sont mis en place sur une plateforme qui peut être couplée sur la platine avec possibilité de mouvement relatif d'une partie de la plateforme de façon à dissocier le mouvement de l'unité fonctionnelle et le mouvement de l'un des systèmes de connexion, en particulier en imposant une fermeture du système de connexion auxiliaire préalable au raccordement principal.

Sous un autre aspect, l'invention se rapporte également à une plateforme comprenant les différents systèmes de connexion et qui peut être mise en place dans une unité fonctionnelle. En particulier, la plateforme comprend un support en plastique, par exemple en forme de L lorsque les barres d'alimentation et de distribution sont décalées en fond de la cellule concernée, sur un côté duquel font saillie des dispositifs de raccordement sur les barres, avantageusement des pinces d'embrochage, de préférence protégés par des protubérances surmoulées du support. Les dispositifs de raccordement sont de préférence reliés à des plages sur lesquelles peuvent être raccordés des câbles de distribution, le support comprenant des aménagements adaptés ; avantageusement, des capots de protection sont prévus au niveau du raccordement pour assurer une degré de protection et/ou d'étanchéité suffisant. La plateforme peut en outre comprendre des éléments adaptés à diverses fonctionnalités comme le guidage de l'unité fonctionnelle, la détermination relative de sa position grâce à la présence d'une partie de capteur, l'ouverture de trappes de protection des barres d'alimentation préalable à l'embrochage de pinces,...

La plateforme comprend en outre des contacts auxiliaires faisant partie d'un bloc qui permet leur ouverture/fermeture dans le mouvement de raccordement de la plateforme sur les barres. En particulier, le bloc comprend deux connecteurs mobiles l'un par rapport à l'autre en translation, dans la même direction que le raccordement sur les barres d'alimentation et distribution, entre une position dans laquelle les contacts qu'ils supportent sont écartés et ouverts, et une position dans laquelle ils sont fermés, correspondant à la réalisation de tests. Le bloc comprend une troisième partie, formant châssis, mobile en translation selon la même direction par rapport aux connecteurs, de façon à ce que le bloc forme un ensemble télescopique. Le châssis est fixe par rapport au support de la plateforme, par exemple monté au dessus des capots de protection, et comprend par exemple un rail de guidage d'un des connecteurs, l'autre connecteur étant monté en fond de tiroir, fixe par rapport aux barres.

Pour permettre que le raccordement sur les barres d'alimentation soit consécutif à la position fermée des contacts auxiliaires, le bloc de contacts auxiliaires comprend en outre des moyens adaptés, notamment un dispositif de verrouillage positif avec des moyens de blocage en position étendue du châssis par rapport aux deux connecteurs tant que les contacts des deux connecteurs ne sont pas en position fermée, et des moyens de commande permettant de désactiver les moyens de blocage quand la position fermée des contacts auxiliaires est atteinte de sorte à libérer le mouvement relatif entre le châssis et les connecteurs. Selon un mode de réalisation préféré, le dispositif de verrouillage comprend un levier pivotant, solidaire du châssis, dont une partie de blocage vient en engagement d'une butée sur un connecteur et une partie de commande est sollicitée hors engagement de la butée par l'autre connecteur lorsque la position relative fermée des deux connecteurs est atteinte. Avantageusement, le bloc comprend aussi des moyens pour *vice versa* permettre que l'ouverture des contacts auxiliaires soit consécutive à la déconnexion des barres d'alimentation, notamment de type ressort sollicitant les moyens de blocage en position de verrouillage dès que la position relative fermée est quittée.

L'invention est également relative à une cellule de distribution électrique comprenant au moins une unité fonctionnelle munie d'une plateforme selon l'invention, ladite cellule comprenant un agencement de barres d'alimentation et de distribution coopérant avec la plateforme. De préférence, la cellule comprend deux jeux de barres d'alimentation parallèles reliés en série par une extrémité, et permet la mise en place d'unités fonctionnelles de la même largeur que la cellule, qui peuvent comprendre une ou deux plateformes pour se raccorder sur un ou deux jeux de barres, ainsi que d'unités fonctionnelles de largeur réduite de moitié de sorte que deux unités fonctionnelles peuvent être mises côte à côte.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
La figure 1 représente schématiquement une cellule de distribution et le principe de raccordement d'une unité fonctionnelle selon l'invention.
Les figures 2A, 2B et 2C montrent des éléments d'une plateforme selon un mode de réalisation de l'invention.
Les figures 3A, 3B et 3C illustrent les positions débrochée, de test et embrochée d'un système de connexion auxiliaire dans un mode de réalisation de l'invention.
La figure 4 montre une cellule de distribution munie de tiroirs selon un mode de réalisation préféré de l'invention.

### DESCRIPTION DETAILLEE D'UN MODE DE REALISATION PREFERE

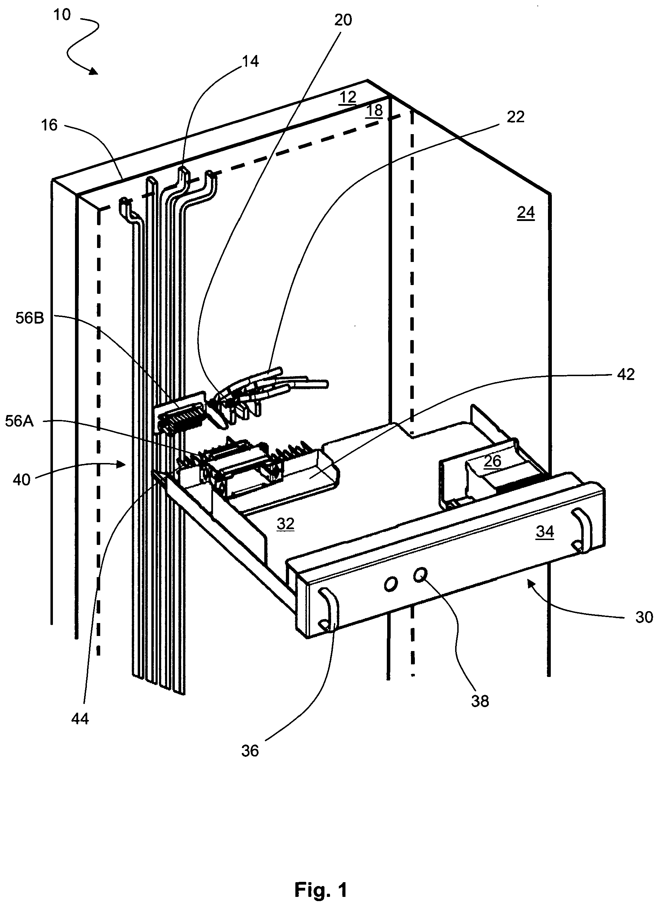

Dans le mode de réalisation de l'invention préféré schématisé en figure 1, les cellules basse tension triphasée 10 comprennent un compartiment de fond 12 comprenant un jeu de quatre barres d'alimentation verticales 14, séparées par une grille de protection 16 d'une goulotte 18 comprenant des conducteurs de distribution ; pour simplifier les raccordements, les conducteurs comprennent une partie d'extrémité rigide 20 sur laquelle sont connectés des câbles 22. Classiquement, pour une installation de 400 V (respectivement 690 V), les barres d'alimentation 14 de section 160 mm² (respectivement 400 mm²) sont alignées avec leur tranche parallèle à la grille de protection 16 ; les parties rigides 20 des conducteurs de distribution présentent le même type de section, d'épaisseur 8 mm, le profil de l'ensemble de ces éléments étant similaire à une portion du jeu de barres 14 de sorte que le raccordement en entrée 14 et en sortie 20 est similaire. Par analogie, les parties rigides 20 des conducteurs seront par la suite identifiées comme « barres » de distribution 20.

La cellule 10 forme un parallélépipède rectangle, fermé par des parois (seule une paroi latérale 24 est illustrée), avec un accès frontal pour raccorder des appareillages électriques 26 aux barres 14, 20. Une pluralité d'appareillages 26 est regroupée dans des unités fonctionnelles 30, guidées en coulissement sur les parois latérales 24, de façon à ce qu'un seul mouvement orthogonal au fond de la cellule 10 connecte directement et simultanément, en entrée et en sortie, un circuit déjà agencé d'appareillages 26. Les tiroirs 30 comprennent une platine 32 de fond et une devanture 34 munie d'une poignée 36 permettant de déplacer le tiroir 30 ; des moyens d'actionnement, de mise en route et/ou indicateurs 38, par exemple des boutons poussoirs, peuvent également être mis en place sur la devanture 34.

La connexion des unités fonctionnelles 30 est donc réalisée par deux systèmes parallèles l'un à l'autre permettant un embrochage simultané sur les barres 14, 20 lors du mouvement du tiroir 30. Selon l'invention, le même mouvement de translation permet la connexion/déconnexion de contacts auxiliaires, comprenant de préférence un système mâle/femelle de même direction d'embrochage que le tiroir 30 par rapport à la cellule 10.

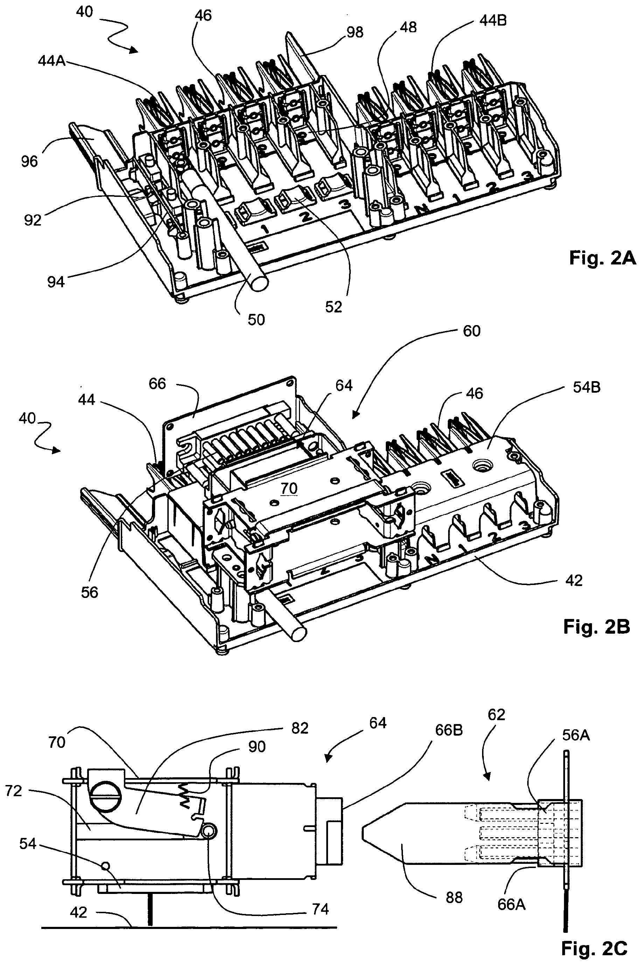

Dans le mode de réalisation préféré de l'invention, les tiroirs 30 de la cellule 10 de distribution électrique sont équipés d'une plateforme 40 comprenant les éléments de connexion nécessaires à assurer le raccordement de puissance en entrée comme en sortie, et le raccordement des contacts auxiliaires. Avantageusement, tel qu'également illustré en figure 2A, la plateforme 40 comprend un support 42 réalisé en matériau plastique qui peut être mis en place dans les tiroirs ; en particulier, le support 42 peut laisser un espace sur la platine 32, par exemple en étant de largeur 250 mm. Pour le mode de réalisation illustré dans lequel les barres d'alimentation 14 et de distribution 20 sont décalées, la plateforme 40 est en forme de L, avec un côté avant destiné à s'insérer en premier dans la cellule 10 formé en échelon, c'est-à-dire qu'une première partie pour la connexion amont est décalée vers l'avant du support 42 par rapport à une deuxième partie pour la connexion de sortie.

Dans le mode de réalisation préféré, le raccordement de puissance est réalisé par embrochage direct de pinces 44 saillantes par rapport à la platine 32 et au support 42, qui peuvent être de conception classique et adaptées à l'architecture de la cellule et notamment à la forme et la taille des barres 14, 20. Les pinces 44 peuvent être identiques pour les entrées et sorties ou non ; bien qu'alignées en deux ensembles parallèles 44A, 44B dans les figures, d'autres options sont possibles selon l'agencement des barres 14, 20. Avantageusement, les pinces conductrices 44, sollicitées vers une position fermée et pouvant s'embrocher autour de la tranche des barres 14, 20, sont mises en place entre des protubérances 46 de protection moulées sur le côté avant du support 42 ; les pinces 44 sont fixées sur des plages conductrices 48 associées au support 42 et auxquelles viennent se raccorder les câbles de puissance 50 de l'unité fonctionnelle 40, par exemple par vissage de cosse. Bien que non illustré, le même type de raccordement est réalisé pour les pinces 44B de sortie. De préférence, des aménagements 52 sont formés sur le fond du support 42 de la plateforme 40 afin de pouvoir fretter les câbles 50 qui seront connectés aux appareillages électriques 26 de l'unité fonctionnelle 30.

Avantageusement, la zone de raccordement entre câbles 50 et plages conductrices 48 est protégée, par exemple par des capots 54 assurant en outre une étanchéité partielle, par exemple de type normé IPXXB. En particulier, dans le mode de réalisation illustré en figure 2B, deux capots 54A, 54B en plastique sont vissés en arrière des pinces 44, sur les branches du L. L'intersection entre les branches reste de préférence libre, et peut être utilisée pour y mettre en place le système de contacts auxiliaires 56, de préférence dans un plan parallèle, décalé au-dessus des câbles 50 d'alimentation.

Le système de contacts auxiliaires 56 est composé d'un bloc 60 permettant une « vraie » position test, de façon à assurer la sécurité optimale du système pendant la phase de test, qui est obtenue lors du mouvement normal de connexion/déconnexion des contacts de puissance 44 dans la cellule 10 : le mouvement de coulissement se déroule, alternativement, entre une position dans laquelle contacts de puissance 44 et auxiliaires 56 sont connectés et une position dans laquelle contacts de puissance 44 et auxiliaires 56 sont déconnectés, via une position dans laquelle les contacts auxiliaires 56 sont connectés alors que les contacts de puissance 14, 20, 44 sont débrochés. En outre, les contacts auxiliaires 56 ne sont pas solidaires des contacts de puissance 44, 48, de sorte qu'ils ne sont pas mobilisés lors des connexions et déconnexions de puissance, et donc non altérés.

Le bloc auxiliaire 60 comprend ainsi deux ensembles de contacts auxiliaires 56A, 56B de formes complémentaires, notamment mâles/femelles, qui peuvent prendre l'un par rapport à l'autre une position fermée de test et une position ouverte de déconnexion. Le passage d'une position à l'autre est réalisé par translation relative d'un ensemble de contacts 56 par rapport à l'autre, ladite translation étant orthogonale aux pinces 44 de la plateforme 40 : les ensembles de contacts 56A, 56B peuvent ainsi être mis en place sur des connecteurs 62, 64 comprenant chacun une surface 66 normale au support 42, qui présente ainsi des protubérances orthogonales 56A, respectivement des orifices de passage 56B pour lesdites protubérances.

Un premier connecteur auxiliaire 62 est monté de façon fixe par rapport à l'alimentation de puissance, c'est-à-dire en fond de tiroir 30 ; en particulier, sa surface 66A munie des protubérances 56A peut être fixée sur une paroi délimitant la goulotte 18. Le deuxième connecteur auxiliaire 64 est solidaire de l'unité fonctionnelle 30 qui occasionnera son mouvement en translation ; par ailleurs, il est monté pour permettre la dissociation entre la position ouverte ou fermée du système de contacts 56, et la position relative des contacts de puissance 44 par rapport aux éléments rigides conducteurs 14, 20 ; en particulier, par le même mouvement de translation orthogonale aux pinces 44 du support 42, le deuxième connecteur 64 peut coulisser dans un châssis 70 solidaire des contacts de puissance 44, c'est-à-dire du support 42 de la plateforme 40. Avantageusement, le châssis 70 est vissé pour fermer l'espace libre entre les capots de protection 54 ; il présente des moyens du guidage 72 du deuxième connecteur 64, notamment des rails 72 complémentaires d'une glissière 74 du deuxième connecteur 64 formant tiroir. Ce mode de réalisation d'un bloc 60 de contacts auxiliaires télescopique en trois parties 62, 64, 70 est préféré, mais d'autres systèmes de translation relative guidée sont possibles.

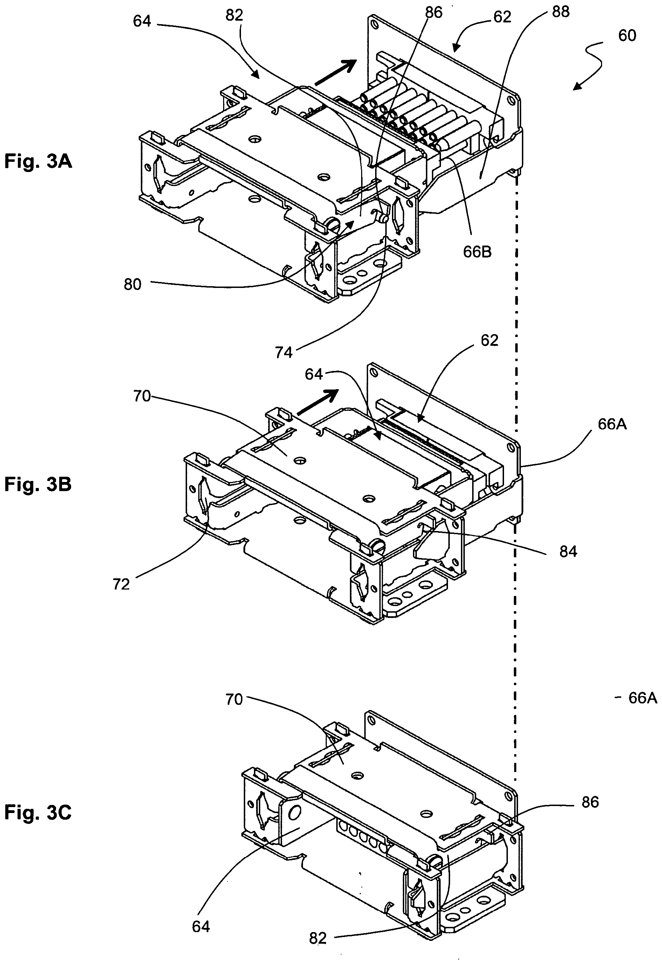

La position étendue du bloc 60 illustrée en figure 3A est obtenue lorsque tous les systèmes sont déconnectés, alors que la position compacte du bloc 60 de la figure 3C correspond à une connexion auxiliaire mais également à une connexion de puissance lorsque l'unité fonctionnelle 30 est mise en place dans la cellule 10. Le deuxième connecteur 64 peut ainsi prendre une position correspondant à la déconnexion de puissance, dans laquelle il fait saillie du châssis 70, et une position correspondant à la connexion de puissance dans laquelle il est inséré au maximum dans le châssis 70 ; avantageusement, dans la position de connexion de puissance, le deuxième connecteur 64 est entièrement localisé à l'intérieur du châssis 70, et le premier connecteur 62 ne dépasse du deuxième connecteur 64 que par sa surface 66A de solidarisation à la partie fixe 18.

Pour assurer le passage par la position test entre la première position déconnectée (débrochée) complète et la deuxième position embrochée (connectée) du tiroir 30, un verrouillage positif du deuxième connecteur 64 par rapport au châssis 70 est prévu de façon à imposer la rétraction en deux étapes du dispositif télescopique 60. En particulier, un dispositif de verrouillage 80 maintient le châssis 70 et le deuxième connecteur 64 en position étendue de déconnexion de puissance tant que les deux connecteurs auxiliaires 62, 64 ne sont pas en position test. Diverses options de réalisation pour un dispositif de verrouillage 80 comprenant des moyens de blocage mobiles et commandés par le premier connecteur 62 sont possibles, avec par exemple un système à came, ou un levier fixe par rapport au deuxième connecteur 64 mais pivotant autour d'un axe le séparant en deux bras, ou toute autre alternative.

Selon l'invention, le dispositif de verrouillage 80 comprend un levier 82 à un bras pivotant autour d'un axe couplé au châssis 70, et muni au niveau de l'extrémité libre d'une surface de blocage 84 coopérant avec une butée 74 du deuxième connecteur 64 en position de déconnexion de puissance ; de préférence, la butée de blocage est identique à la glissière 74 du deuxième connecteur 64. Le levier 82 comprend par ailleurs une surface de commande 86 apte à coopérer avec le premier connecteur 62, et notamment l'extrémité libre du levier 82 est configurée en surface de came ou avec une protubérance 86 qui peut être mobilisée en pivotement par un doigt 88 du premier connecteur 62 pour être dissociée de la butée 74 lorsque le premier et le deuxième connecteur 62, 64 sont en position fermée.

De préférence, des moyens de rappel 90 sollicitent le dispositif de verrouillage 80 en position bloquée, par exemple un ressort de torsion 90 rappelle le levier 82 dans la position dans laquelle la surface de blocage 84 coopère avec la butée 74. Avantageusement, pour que la succession inverse d'étapes soit respectée, les moyens adaptés sont relatifs à la nature des contacts : le glissement du connecteur 64 dans le châssis 70, et donc la coopération entre le doigt suiveur de came 88 et le levier 80, s'effectuent avec moins de friction que l'extraction des systèmes de contact 56.

Ainsi, tel qu'illustré dans les figures 3A à 3C, une fois que le tiroir 30 est localisé proche des «barres» 14, 20 de sorte qu'une contrainte est exercée sur la plateforme 40, de la position débrochée dans laquelle connecteurs de puissance 44 et auxiliaires 56 sont déconnectés, à la position test, le deuxième connecteur 64 fixé sur l'unité fonctionnelle 30 avance jusqu'à fermeture des contacts auxiliaires 56 et jusqu'à ce que la position test soit atteinte, avec la partie puissance déconnectée et le bloc auxiliaire 60 connecté (figure 3B). De la position test à la position de connexion de puissance, le doigt de guidage 88 du premier connecteur 62 actionne la surface de commande 86 qui libère le levier 82 du châssis 70 : le deuxième connecteur 64 peut alors coulisser dans le châssis 70 lorsque le tiroir 30 avance jusqu'à sa position finale, avec embrochage des pinces 44 de puissance sur les éléments rigides 14, 20. Les deux connecteurs 62, 64 du bloc auxiliaire 60 restent fermés durant cette course de sorte qu'à la fin de la manoeuvre, toutes les parties (auxiliaires et puissance) sont embrochées (figure 3C).

Réciproquement, de la position embrochée de la figure 3C à la position test, l'unité fonctionnelle 30 recule, les pinces 44 se dégagent et le frottement des contacts auxiliaires 56 fait coulisser la glissière 74 du deuxième connecteur 64 dans le châssis 70. Juste avant la position test de la figure 3B, le doigt de guidage 88 libère la came 86 qui, rappelée par le ressort de torsion 90, remonte et bloque le deuxième connecteur 64 en position étendue par rapport au châssis 70 : à ce moment, la puissance est déconnectée et les auxiliaires sont connectés. De la position test à la position débrochée de la figure 3A, la partie du bloc auxiliaire 60 solidaire du tiroir 30 s'écarte alors du premier connecteur 62 : les connecteurs sont alors débrochés.

Le bloc de contacts auxiliaires 60 tel que précédemment décrit, ainsi que ses variantes, permet de réaliser les connexions et déconnexions de façon économique, avec des pièces simples et sans commande à distance, en utilisant uniquement le mouvement du tiroir 60 pour actionner le blocage et le déblocage du mécanisme de verrouillage 80. Une position test avec déconnexion de la puissance et fermeture des contacts auxiliaires 56 est obtenue, sans glissement entre les contacts mâle et femelle lors du passage de la position test à la position de connexion de puissance, ce qui permet d'éviter les interférences électriques induites par les frottements.

Avantageusement, la plateforme 40 comprend en outre des éléments permettant de supporter et/ou d'actionner des systèmes, comme des capteurs et/ou micro-rupteurs, permettant de signaler la position ouverte, fermée ou en test du tiroir 30, notamment par des indicateurs 38 en devanture 34. En particulier, tel qu'illustré en figure 2A, parallèlement à l'axe de déplacement des pinces 44 et sur un côté du support 42, une rampe protubérante 92 peut déclencher un capteur de position relative lui faisant face, par exemple un capteur placé sur la paroi latérale 24. La plateforme 40 peut également embarquer un dispositif de type micro-rupteur 94 (ou « *microswitch* » selon la terminologie anglo-saxonne) pour coopérer avec un élément fixe par rapport à la cellule 10 et indiquer la position relative du tiroir 30.

Il est en outre avantageux que la plateforme 40 selon l'invention comprenne également des moyens de guidage avec débattement limité par rapport à la platine 32 du tiroir 30, par exemple un doigt coulissant 96 adapté. Par ailleurs, selon le mode de réalisation et les options choisies, il est possible que les barres de puissance 14 sur lesquelles les unités fonctionnelles 30 se raccordent soient protégées par une grille 16 munie de trappes d'accès avec volets de protection, par exemple similaires aux canalisations électriques préfabriquées de type Canalis, de sorte qu'en l'absence de tiroirs 30, les barres 14 soient inaccessibles. Des moyens 98 d'ouverture des trappes d'accès sont alors prévus sur les tiroirs 30, et il est avantageux que ces moyens soient localisés sur la plateforme de connexion 40, par exemple un doigt 98 s'étendant au-delà des protubérances 46 protectrices des pinces d'embrochage de puissance 44 de sorte que l'ouverture ait lieu juste avant l'insertion des pinces 44 dans les orifices de la grille de protection 16.

Tel que mentionné, la plateforme 40 est usuellement mise en place sur une platine 32 pour une utilisation dans une armoire 10 de distribution basse tension, la face arrière du tiroir 30 laissant un accès aux pinces 44 qui en font saillie pour pouvoir s'embrocher directement autour de barres 14, 20 localisés sur le fond de l'armoire 10. Il apparaît ainsi que la plateforme 40 concentre les fonctions sur le même support 42 couplé en fond d'unité fonctionnelle 30, ce qui augmente le volume disponible dans le reste du tiroir 30. En outre, cette plateforme peut se loger indifféremment dans les tiroirs 30, 30' de profondeurs différentes, notamment 100 et 200 mm, ainsi que dans des tiroirs de largeur supérieure à sa taille.

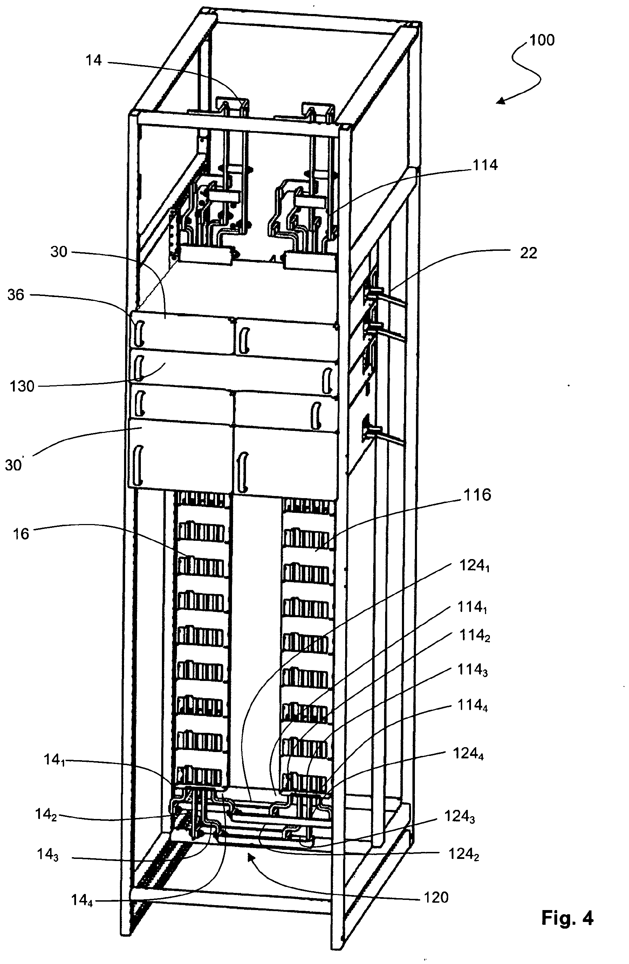

Avantageusement, tel qu'illustré en figure 4, l'armoire 100 comprend deux jeux de barres 14, 114 d'alimentation parallèles l'un à l'autre, raccordés à la même ligne d'alimentation par exemple par des pinces à une extrémité, de sorte qu'il est possible de mettre en place deux tiroirs 30 selon l'invention côte à côte. En particulier, dans un mode de réalisation préféré, les deuxièmes extrémités, usuellement en bas de l'armoire 100, de chaque barre 14, 114 sont reliées entre elles de façon à former une boucle conductrice 120 entre les deux jeux. Selon un mode de réalisation préféré illustré en figure 4, les liaisons entre les barres 14ᵢ, 114ᵢ de chaque jeu sont réalisées par des conducteurs 124ᵢ plans pliés, de préférence de même nature, voire de même section, que les barres 14, 114, pour minimiser l'encombrement résiduel, de sorte à former une boucle. Le courant amené par la ligne principale est donc divisé par deux dans chaque jeu de barres d'alimentation 14, 114, ce qui permet de diminuer la section des barres conductrices, et donc de gagner de la profondeur dans la cellule 100 pour les unités fonctionnelles 30 : il est ainsi possible d'installer plus d'appareillages électriques 26 dans chaque tiroir 30. En outre, un nombre plus important d'unités fonctionnelles 30 peut être installé dans l'armoire 10, ce qui permet d'économiser du temps de câblage à l'intérieur des tiroirs 30 sans augmenter le temps de raccordement entre tiroir 30 et barres de distribution 20, les tiroirs 30 étant directement embrochables, sans blocs de raccordement complexes à aligner.

Il est possible également d'utiliser des unités fonctionnelles 130 correspondant à la largeur de deux tiroirs 30 précédents, et occupant l'espace devant les deux jeux de barres 14, 114 d'alimentation, c'est-à-dire la largeur complète du tableau 100. Selon l'intensité nécessaire, les unités fonctionnelles doubles 130 comprennent une ou deux plateformes 40 précédentes, de façon à se connecter sur un ou les deux jeux de barres, et donc à obtenir la puissance maximale ou non. La modularité de la cellule de distribution 10 est donc augmentée. Qui plus est, l'intensité lors d'un court-circuit est de fait divisée par deux, ce qui réduit d'autant les efforts induits sur les barres conductrices 14, 114.

Bien que l'invention ait été décrite en référence à une cellule 10, 100 de distribution basse tension à jeux de quatre barres 14, 114, elle ne s'y limite pas : d'autres éléments peuvent être concernés par l'invention, en particulier en ce qui concerne la forme ou le nombre des barres 14, 20, la taille générale de l'armoire 10, 100 et/ou des barres 14, 20, pinces 44 et tiroirs 30, 130. En outre, les différents éléments décrits en combinaison peuvent être utilisés indépendamment l'un de l'autre, ou combinés à d'autres alternatives : par exemple, un système de position auxiliaire selon l'invention peut être utilisé dans une cellule à simple barre de distribution, ou une plateforme de tiroir selon l'invention peut être utilisée directement associée à un appareillage électrique.

## Revendications

1. Plateforme (40) de connexion pour unité fonctionnelle (30) de cellule électrique (10) comprenant un support (42) muni sur un premier côté d'un ensemble de pinces d'alimentation (44A) et d'un ensemble de pinces de sortie (44B), chaque pince (44) étant ouverte vers l'extérieur du support (42) et agencée de façon à pouvoir être embrochée sur un élément conducteur rigide (14, 20) de la cellule (10) et débrochée dudit élément lors d'un mouvement de translation selon une première direction perpendiculaire à une partie au moins du premier côté, **caractérisée par**, en outre, un bloc de contacts auxiliaires (60) comprenant :
- un châssis (70) fixe par rapport au support (42) ;
- un premier et un deuxième connecteurs (62, 64) comprenant chacun des contacts (56) de formes complémentaires, mobiles en translation selon la première direction l'un par rapport à l'autre entre une position ouverte de déconnexion entre leurs contacts (56) et une position fermée de test dans laquelle les contacts (56A) du premier connecteur (62) sont fermés avec les contacts (56B) du deuxième connecteur (64), les deux connecteurs (62, 64) étant mobiles en translation selon la première direction par rapport au châssis (70) entre une position de déconnexion de puissance et une position de connexion de puissance ;
- un dispositif de verrouillage positif (80) du deuxième connecteur (64) comprenant des moyens de blocage (84) mobiles entre une position de verrouillage dans laquelle le deuxième connecteur (64) et le châssis (70) sont verrouillés dans la position de déconnexion de puissance et une position de déverrouillage dans laquelle le mouvement relatif du deuxième connecteur (64) par rapport au châssis (70) est permis, et des moyens de commande (86) aptes à entraîner les moyens de blocage (84) de la position de verrouillage à la position de déverrouillage lorsque les deux connecteurs (62, 64) atteignent leur position relative fermée de test et à entraîner les moyens de blocage (84) de leur position de déverrouillage à leur position de verrouillage dès que les deux connecteurs (62, 64) quittent leur position relative fermée de test, ledit dispositif de verrouillage (80) comportant un levier (82) pivotant sur le châssis (70) avec une surface de commande (86) apte à coopérer avec le premier connecteur (62) et une surface de blocage (84) apte à coopérer avec une butée (74) sur le deuxième connecteur (64),
et notamment l'extrémité libre du levier (82) est configurée en surface de came ou avec une protubérance (86) qui peut être mobilisée en pivotement par un doigt (88) du premier connecteur (62) pour être dissociée de la butée (74) lorsque le premier et le deuxième connecteur (62, 64) sont en position fermée.

2. Plateforme selon la revendication 1 dans laquelle le dispositif de verrouillage (80) comprend un ressort (90) rappelant la surface de blocage (84) vers la butée (74).

3. Plateforme selon l'une des revendications 1 ou 2 dans laquelle les pinces (44A) du premier ensemble sont alignées, les pinces (44B) du deuxième ensemble sont alignées et parallèles aux pinces du premier ensemble (44A) de sorte que le support (42) forme un L au niveau du premier côté, et le châssis (70) du bloc de contacts (60) auxiliaires est localisé à l'intersection du L.

4. Plateforme selon la revendication 3 comprenant des capots de protection (54) sur les branches du L, et dans laquelle le châssis (70) du bloc de contacts auxiliaires (60) est localisé dans le même plan que les capots (54).

5. Plateforme l'une des revendications 1 à 4 comprenant en outre des éléments protubérants (46, 96, 98) par rapport au premier côté du support (42), lesdits éléments permettant la protection, le guidage en translation et/ou l'ouverture de volets de trappes.

6. Plateforme l'une des revendications 1 à 5 dans laquelle le support (42) et/ou le deuxième connecteur (64) comprennent en outre un élément (92, 94) de capteur de position.

7. Unité fonctionnelle (30) de cellule électrique (10) comprenant une platine (32), une devanture (34) munie de moyens (36) permettant de bouger la platine (32) en translation parallèlement à son plan et normalement à la devanture (34), et une plateforme (40) selon l'une des revendications précédentes, le châssis (70) de ladite plateforme (40) étant monté fixe par rapport à la platine (32).

8. Unité fonctionnelle selon la revendication 7 dans laquelle la plateforme (40) est selon la revendication 7, comprenant en outre des moyens (38) permettant d'indiquer la position des capteurs.

9. Cellule électrique (10) comprenant une ossature parallélépipédique rectangle, un jeu de barres d'alimentation (14) et des éléments rigides de distribution (20) parallèles sur un côté du parallélépipède, au moins une unité fonctionnelle (30) selon l'une des revendications 7 ou 8, des moyens de guidage (24) de l'unité fonctionnelle (30) orthogonaux aux barres (14, 20) de façon à ce que la plateforme (40) de l'unité fonctionnelle (30) puisse venir s'embrocher sur les barres (14) et éléments rigides (20).

10. Cellule électrique selon la revendication 9 comprenant deux jeux de barres (14, 114) d'alimentation parallèles l'un à l'autre et reliés entre eux en série à une extrémité.

11. Cellule selon la revendication 10 comprenant au moins une unité fonctionnelle (30) d'une première largeur et au moins une unité fonctionnelle (130) de largeur double comprenant une ou deux plateformes (40).

## Patentansprüche

1. Verbindungsplattform (40) für eine Funktionseinheit (30) einer elektrischen Zelle (10), aufweisend einen Träger (42), der auf einer ersten Seite mit einem Satz Versorgungsklemmen (44A) und einem Satz Ausgangsklemmen (44B) versehen ist, wobei jede Klemme (44) zur Außenseite des Trägers (42) hin offen ist und so angeordnet ist, dass sie auf ein starres Leitelement (14, 20) der Zelle (10) aufgesteckt und während einer Translationsbewegung in einer ersten Richtung senkrecht zu mindestens einem Teil der ersten Seite aus diesem Element herausgezogen werden kann, ferner **gekennzeichnet durch** einen Block mit Hilfskontakten (60), aufweisend:
- einen Rahmen (70), der relativ zum Träger (42) befestigt ist;
- einen ersten und einen zweiten Verbinder (62, 64), die jeweils Kontakte (56) mit komplementären Formen aufweisen, die in der ersten Richtung relativ zueinander zwischen einer offenen Unterbrechungsposition zwischen ihren Kontakten (56) und einer geschlossenen Testposition, in der die Kontakte (56A) des ersten Verbinders (62) mit den Kontakten (56B) des zweiten Verbinders (64) geschlossen sind, translatorisch verschiebbar sind, wobei die beiden Verbinder (62, 64) in der ersten Richtung relativ zu dem Rahmen (70) zwischen einer Stromunterbrechungsposition und einer Stromverbindungsposition translatorisch verschiebbar sind;
- eine formschlüssige Verriegelungsvorrichtung (80) des zweiten Verbinders (64), aufweisend Blockiermittel (84), die zwischen einer Verriegelungsposition, in der der zweite Verbinder (64) und der Rahmen (70) in der Stromunterbrechungsposition verriegelt sind, und einer Entriegelungsposition, in der die relative Bewegung des zweiten Verbinders (64) relativ zu dem Rahmen (70) zulässig ist, bewegbar sind, und Steuerungsmittel (86), die geeignet sind, die Blockiermittel (84) von der Verriegelungsposition zu der Entriegelungsposition zu führen, wenn die beiden Verbinder (62, 64) ihre relative geschlossene Testposition erreichen, und die Blockiermittel (84) von ihrer Entriegelungsposition zu ihrer Verriegelungsposition zu führen, sobald die beiden Verbinder (62, 64) ihre relative geschlossene Testposition verlassen, wobei die Verriegelungsvorrichtung (80) einen Hebel (82) aufweist, der am Rahmen (70) mit einer Steuerfläche (86) schwenkbar ist, der geeignet ist, mit dem ersten Verbinder (62) zusammenzuwirken, und eine Blockierfläche (84), die geeignet ist, mit einem Anschlag (74) auf dem zweiten Verbinder (64) zusammenzuwirken, und das freie Ende des Hebels (82) insbesondere auf der Nockenfläche oder mit einem Vorsprung (86) konfiguriert ist, der in einer Schwenkbewegung durch einen Finger (88) des ersten Verbinders (62) bewegt werden kann, um von dem Anschlag (74) getrennt zu werden, wenn sich der erste und der zweite Verbinder (62, 64) in geschlossener Position befinden.

2. Plattform nach Anspruch 1, wobei die Verriegelungsvorrichtung (80) eine Feder (90) umfasst, die die Verriegelungsfläche (84) in Richtung des Anschlags (74) vorspannt.

3. Plattform nach einem der Ansprüche 1 bis 2, wobei die Klemmen (44A) des ersten Satzes in einer Reihe ausgerichtet sind, die Klemmen (44B) des zweiten Satzes in einer Reihe ausgerichtet und parallel zu den Klemmen des ersten Satzes (44A) sind, so dass der Träger (42) an der ersten Seite ein L bildet, und der Rahmen (70) des Blocks der Hilfskontakte (60) am Schnittpunkt von L angeordnet ist.

4. Plattform nach Anspruch 3, aufweisend Schutzabdeckungen (54) auf den Schenkeln des L, und wobei der Rahmen (70) des Blocks der Hilfskontakte (60) in derselben Ebene wie die Abdeckungen (54) angeordnet ist.

5. Plattform nach einem der Ansprüche 1 bis 4, aufweisend ferner Elemente (46, 96, 98), die relativ zur ersten Seite des Trägers (42) vorspringen, wobei die Elemente den Schutz, die translatorische Führung und/oder das Öffnen von Schutzklappen ermöglichen.

6. Plattform nach einem der Ansprüche 1 bis 5, wobei der Träger (42) und/oder der zweite Verbinder (64) ferner ein Positionssensorelement (92, 94) aufweisen.

7. Funktionseinheit (30) einer elektrischen Zelle (10), aufweisend eine Platte (32), eine Frontseite (34), die mit Mitteln (36) versehen ist, die es ermöglichen, die Platte (32) parallel zu ihrer Ebene und senkrecht zur Frontseite (34) translatorisch zu verschieben, und eine Plattform (40) nach einem der vorhergehenden Ansprüche, wobei der Rahmen (70) der Plattform (40) relativ zur Platte (32) fest montiert ist.

8. Funktionseinheit nach Anspruch 7, wobei die Plattform (40) nach Anspruch 7 ist, ferner aufweisend Mittel (38), die es ermöglichen, die Position der Sensoren anzugeben.

9. Elektrische Zelle (10), aufweisend ein parallelepipedförmiges Rechteckgerüst, eine Versorgungssammelschiene (14) und starre Verteilungselemente (20) parallel zu einer Seite des Parallelepipeds, mindestens eine Funktionseinheit (30) nach einem der Ansprüche 7 oder 8, Mittel zum Führen (24) der Funktionseinheit (30) orthogonal zu den Schienen (14, 20), so dass sich die Plattform (40) der Funktionseinheit (30) auf die Schienen (14) und starren Elemente (20) aufstecken lässt.

10. Elektrische Zelle nach Anspruch 9, aufweisend zwei Versorgungssammelschienen (14, 114), die parallel zueinander sind und an einem Ende in Reihe miteinander verbunden sind.

11. Zelle nach Anspruch 10, aufweisend mindestens eine Funktionseinheit (30) mit einer ersten Breite und mindestens eine Funktionseinheit (130) mit doppelter Breite, die eine oder zwei Plattformen (40) aufweist.

## Claims

1. Connection platform (40) for a functional unit (30) of an electrical cell (10) comprising a support (42) provided on a first side with a set of power supply clamps (44A) and a set of output clamps (44B), each clamp (44) being open towards the outside of the support (42) and arranged so as to be able to be pinned on a rigid conductor element (14, 20) of the cell (10) and unpinned from said element upon a translational movement in a first direction at right angles to at least a part of the first side, further **characterized by** a block of auxiliary contacts (60) comprising:
- a frame (70) that is fixed relative to the support (42);
- a first and a second connector (62, 64) each comprising contacts (56) of complementary forms, translationally mobile in a first direction relative to one another between an open position of disconnection between their contacts (56) and a closed test position in which the contacts (56A) of the first connector (62) are closed with the contacts (56B) of the second connector (64), the two connectors (62, 64) being translationally mobile in the first direction relative to the frame (70) between a power disconnection position and a power connection position;
- a positive locking device (80) for the second connector (64) comprising blocking means (84) that are mobile between a locking position in which the second connector (64) and the frame (70) are locked in the power disconnection position and an unlocking position in which the relative movement of the second connector (64) relative to the frame (70) is permitted, and control means (86) capable of driving the blocking means (84) from the locking position to the unlocking position when the two connectors (62, 64) reach their relative closed test position and of driving the blocking means (84) from their unlocking position to their locking position as soon as the two connectors (62, 64) leave their relative closed test position, said locking device (80) comprising a lever (82) pivoting on the frame (70) with a control surface (86) capable of cooperating with the first connector (62) and a blocking surface (84) capable of cooperating with an abutment (74) on the second connector (64), and in particular the free end of the lever (82) is configured as a cam surface or with a protuberance (86) which can be pivotingly mobilized by a finger (88) of the first connector (62) to be separated from the abutment (74) when the first and the second connectors (62, 64) are in closed position.

2. Platform according to Claim 1, wherein the locking device (80) comprises a spring (90) returning the blocking surface (84) to the abutment (74).

3. Platform according to one of Claims 1 and 2, wherein the clamps (44A) of the first set are aligned, the clamps (44B) of the second set are aligned parallel to the clamps of the first set (44A) such that the support (42) forms an L on the first side, and the frame (70) of the block of auxiliary contacts (60) is located at the intersection of the L.

4. Platform according to Claim 3, comprising protection covers (54) on the branches of the L, and wherein the frame (70) of the block of auxiliary contacts (60) is located in the same plane as the covers (54).

5. Platform according to one of the Claims 1 to 4, further comprising protuberant elements (46, 96, 98) relative to the first side of the support (42), said elements allowing the protection, the translational guidance and/or the opening of hatch flaps.

6. Platform according to one of Claims 1 to 5, wherein the support (42) and/or the second connector (64) further comprise a position sensor element (92, 94).

7. Functional unit (30) of an electrical cell (10) comprising a deck (32), a front panel (34) provided with means (36) making it possible to move the deck (32) in translation parallel to its plane and normally to the front panel (34), and a platform (40) according to one of the preceding claims, the frame (70) of said platform (40) being fixedly mounted relative to the deck (32).

8. Functional unit according to Claim 7, wherein the platform (40) is according to Claim 7, further comprising means (34) making it possible to indicate the position of the sensors.

9. Electrical cell (10) comprising a rectangular parallelepipedal framework, a set of power supply busbars (14) and rigid distribution elements (20) parallel to a side of the parallelepiped, at least one functional unit (30) according to one of Claims 7 and 8, guidance means (24) for the functional unit (30) orthogonal to the busbars (14, 20) so that the platform (40) of the functional unit (30) can be pinned on the bars (14) and rigid elements (20).

10. Electrical cell according to Claim 9, comprising two power supply busbars (14, 114) parallel to one another and linked together in series at one end.

11. Cell according to Claim 10, comprising at least one functional unit (30) of a first width and at least one functional unit (130) of double width comprising one or two platforms (40).
